# EUROPEAN PATENT SPECIFICATION

(11) **EP 0 872 083 B1**
(45) Date of publication and mention of the grant of the patent: **01.12.2004**
(21) Application number: 96920852.9
(22) Date of filing: 26.06.1996
(51) Int. Cl.: H04L 12/24, H04L 7/04

(54) **IMPLEMENTING A FAULT-TOLERANT BUS IN A TELECOMMUNICATIONS NETWORK**
IMPLEMENTIERUNG EINES FEHLERTOLERANTEN BUSSES IN EINEM FERNMELDENETZ
IMPLEMENTATION D'UN BUS A TOLERANCE DE PANNES DANS UN RESEAU DE TELECOMMUNICATIONS

(30) Priority: 28.06.1995 FI 953207
(43) Date of publication of application: 21.10.1998
(73) Proprietor: Nokia Corporation, 02150 Espoo (FI)
(72) Inventor: KAINULAINEN, Jukka, FIN-00720 Helsinki (FI)
(74) Representative: Virkkala, Jukka Antero
(86) International application number: PCT/FI1996/000371
(87) International publication number: WO 1997/001904

(56) References cited:
- WO-A-94/11966
- WO-A-94/22251
- GB-A- 2 168 574
- US-A- 2 986 723
- US-A- 4 837 850
- US-A- 5 404 134

## Description

The invention relates to a method as claimed in the preamble of the attached claim 1 and an arrangement as claimed in the preamble of the attached claim 6 for implementing in a telecommunications network a secured bus for management purposes etc. Hierarchic Synchronization is disclosed in US 4 837 850, for example.

A management bus refers to such a data transmission connection that is used for transmitting network management information, that is, information whose purpose is e.g. to collect fault information or to direct functional units of the network into a specific state. In principle, the method of the invention is suited for implementing any kind of bus, although in practice, transmission of management information is by far the most important thinkable implementation of the bus.

The primary object of the present invention is to carry out a secured management connection in a loop network or a so-called mesh network which consists of loops (in a mesh network, there are more than one route between any two nodes), but the invention is generally suited for implementing a secured bus if the form of the bus is suitable for the structure of synchronization hierarchy used in the network. Nodes that are connected to the bus may transmit their messages to the bus, and they will thus spread along the bus to all the nodes connected to it. The bus may not contain a loop, because in that case the transmitted message would remain circulating in the loop (the crossing points of the data connections of a telecommunications network are herein referred to as nodes. Node devices include e.g. branching and multiplexing devices and cross-connection switches).

Signals between the nodes of the network may be e.g. 2048 kbit/s signals in accordance with ITU-T (former CCITT) recommendations G.703/G.704, a frame of said signal containing 32 time-slots (TS0...TS31) and the multiframe containing 16 frames. Management information may be transmitted in the frame structure of such a signal e.g. so that a service channel reserves e.g. three bits of the bits of time-slot TSO from the frame structure. In every other frame, time-slot TSO contains a frame alignment signal, but in every other time-slot, bits 4 to 8 are free for domestic use, in which case they may be used for transmitting network management information.

Nowadays, a secured management bus is typically implemented by making use of conditional methods especially implemented for this purpose, in other words, the state of the signal to be transmitted and some specific status flags are monitored in a node of the network. When they meet specific predetermined criteria, a securing connection is switched on. This will be described in more detail in the following.

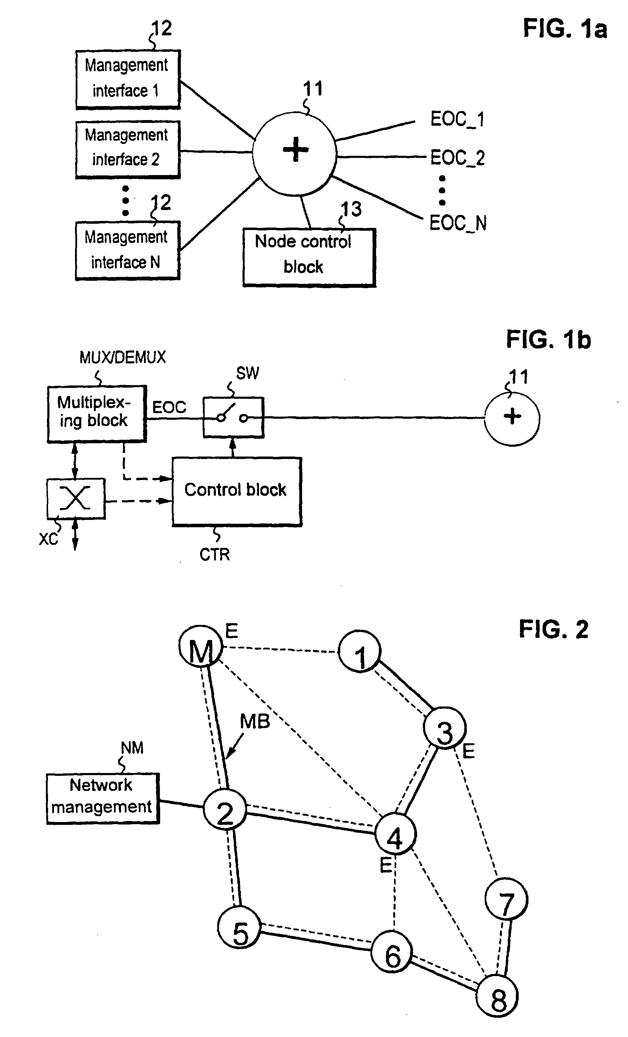

Figure 1a illustrates the principle according to which the management bus is typically implemented within a nodal device of the network. The node has a summer 11 to which all the connections of the management bus are applied. These connections may include:
- a local management interface 12 located in the device, to which interface e.g. the network management system may be directly connected. There may be more than just one of these local management interfaces.
- management channels EOC_1...EOC_N (EOC, Embedded Operation Channel or ECC, Embedded Control Channel) transmitted in the different useful signals
- a connection to a separate control block 13 of the node, in which block the messages entering the node are processed and from which the received messages are answered.

Messages may arrive from all the directions shown in the figure, and all these directions receive messages (in other words, the traffic from the summer is bidirectional in all the directions shown in the figure). In a summing point 11, channels coming from the different directions are combined. Data coming from a certain direction is switched (transmitted) further to all the other directions. Only one transmitter at a time may transmit data (in case more transmitters transmit data to the bus simultaneously, the signals will be summed with each other and the data will be corrupted).

In principle, the summer is a very simple device; a single logical AND operation is carried out in it for the management or service channels connected to it. If at least one of the signals is in a "zero" state, the result is zero. This means in practice that the idle mode of the line is one. In other words, if the device is not transmitting anything, it remains in state 1. (The line coming from the control block 13 to the summer is in state 1 when the node has nothing to transmit, whereby it does not have any effect on the other lines). The traffic is serial from the point of view of the summer 11 and communication blocks of the devices connected to the service channel. At some stage, the data may be in the parallel form, but when applying it to the summer, it must be converted into the serial form.

When securing is carried out in the solution disclosed above, the desired EOC channels must be able to be switched on or off when need be (depending on the states of the signal and the monitored bits). This may be carried out e.g. in accordance with Figure 1b so that there is a separate switch SW for each EOC channel, said switch being controlled on the basis of the states of the signal and of the monitored bits. A signal entering the node is first directed to a multiplexing block MUX/DEMUX, in which the signal of the EOC channel is separated from the rest of the signal and applied to the switch SW. The other time-slots of the arriving signal are switched to a cross-connection block XC, from which they are switched further. The control block CTR of the switch receives the information on the state of the signal from the multiplexing block, and it also reads the criterion bits from the cross-connection block. On the basis of this information, it switches the securing connection on by commanding the corresponding switch SW on. (For the sake of simplicity, only one signal is shown in the figure, but in the case of more signals, the operation is carried out logically in the same way.

On the network level, the above appears so that the network management system has been connected to the management bus in one node via which it has an access to the other nodes of the network along the management bus. This is illustrated in Figure 2, in which the network shown comprises a master node M and eight nodes 1...8, and the network management system NM is connected to node 2. Normal data connections between the nodes are marked with broken lines and the management bus MB with a thicker, solid line. In reality, the management bus thus consists of normal data connections (i.e. it passes within normal data connections), but in the logical sense, however, it is a network that is separate from the normal data connections (as shown in Figure 2). At certain points of the network, there are conditional connections for the management bus (similar to those in Figure 1b) for switching on the securing management connection. In this exemplary case, the conditional connections, which are marked with a reference symbol E, are located in nodes M, 3 and 4, whereby node M is able to switch on a secured connection to the direction of node 1, node 3 in the direction of node 7, and node 4 in the direction of node 6, when need be.

The management bus is constructed in the network as separate switchings. It is determined separately in each node where the management connections (that must be connected to the summer) are obtained from. The determinations are made by the user and they are permanent. The switchings are always valid when the signal that contains the management channel is valid. In case it is detected the signal is faulty (it has a fault that causes e.g. an alarm at the far end, or an alarm is received from the far end), connecting the management channel to the summer is prevented so that the interferences possibly coming from the connection would not interfere with the traffic on the service channel via the summer. In a secured management bus, one or more switching points of the management connection are conditional, that is, a switching is carried out to the summer only if a specific predetermined criterion (e.g. a predetermined state of a monitored bit) is fulfilled. Depending on the device, the criterion may be linked to different factors.

The secured management bus implemented in the manner described above is attended by the drawbacks that, first of all, the entire management bus must be implemented as an entity separate from the rest of the network. The user (operator) has had to parameterize where the management bus is passing, at which points of the network the fixed connections and the conditional connections are located, and what are the criteria of these conditional connections. The user has also determined the topology of the management bus and its operation in fault situations. This kind of solution often causes plenty of determination work to the user of the network, and this work must be carried out carefully. The ability of such systems to recover from faults has also been limited.

The object of the present invention is to eliminate the drawbacks mentioned above and achieve a new, simpler solution than heretofore for implementing a management bus or other bus. This is achieved with a method of the invention, which is characterized in what will be set forth in the characterizing part of the attached claim 1. The arrangement of the invention, in turn, is characterized in what will be set forth in the characterizing part of the attached claim 7.

The idea of the invention is to employ in the network a synchronization method (known per se) by means of which a hierarchic acyclic structure is formed in the network, and to make use of this structure for implementing a bus by switching the management bus on at least on those inter-nodal connections along which the synchronization method used has chosen the synchronization to proceed. In a node of the network this means that it comprises means that carry out switching according to which way the synchronization has been chosen to proceed each time.

On account of the solution of the invention, there is no longer need to construct the management bus as a separate implementation, but the management connection operates in a secured manner after the user has parameterized the synchronization of the network into order. It is thus also possible to implement a secured management bus in a simple manner by means of implementing the synchronization of the network. The user thus no longer needs to plan and parameterize the management bus, but the nodal devices are automatically able to construct the bus in the network.

In the following, the invention and its preferred embodiment will be described in closer detail with reference to Figures 3a-13d in the examples according to the attached drawings, in which
Figure 1a illustrates the principle of implementation of the management bus inside a nodal device of the network,
Figure 1b illustrates the principle of implementation of securing the management bus inside a nodal device of the network,
Figure 2 illustrates implementation of the management bus on the network level,
Figures 3a and 3b illustrate establishing a synchronization tree in a telecommunications network,
Figures 4a and 4b illustrate implementation of a method of the invention in a network employing a synchronization method based solely on a priority list,
Figure 5 is a flow chart illustrating an inference process carried out in a node of a network of the type shown in Figure 4a,
Figure 6 is a flow chart illustrating a monitoring process carried out in a node of a network of the type shown in Figure 4a,
Figure 7 is a flow chart illustrating combination of the above inference and monitoring processes,
Figure 8 shows those devices of a network node by means of which the method of the present invention is carried out,
Figures 9a...9d show alternative switching devices for the node shown in Figure 8,
Figure 10 is a flow chart illustrating basic inference and monitoring of a signal in a network employing message-based master-slave synchronization,
Figure 11 shows the structure of an interface unit of a node in a network employing message-based master-slave synchronization,
Figure 12 is a flow chart illustrating basic inference according to the invention and monitoring of a signal in a network employing communicating master-slave synchronization in which an indication of a loop generated in synchronization is transmitted, and

Figures 13a...13d show alternative structures of an interface unit of a node in a network employing communicating master-slave synchronization in which an indication on a loop generated in synchronization is transmitted.

In the above, a management bus and implementing a secured management bus in prior art systems were described. In the following, synchronization methods used in these systems, particularly master-slave synchronization employed in the method of the invention will be disclosed first for clarifying the idea of the invention.

In telecommunications systems, synchronization may be carried out either by means of separate synchronization connections or by making use of normal data connections between the nodes (devices) of the system. Separate synchronization connections are used in some single cases only, and extremely rarely for synchronizing the entire network. When using data connections for synchronization, the line code must be such that the nodes are able to distinguish from the incoming data signal the clock frequency, as well. From these clock frequencies, synchronization of the nodes of the network may be accomplished with two basic methods: mutual synchronization and master-slave synchronization. In mutual synchronization, each node generates its own clock frequency from the mean value of the frequencies of the incoming signals and its own current clock frequency. All the nodes of the network thus approach a common average frequency and in the stable state they have reached it. It is not possible, however, to synchronize a network employing mutual synchronization with a desired source, as a result of which it is difficult to interconnect the different networks because it is thus not possible to determine the precise operating frequency of the entire network. In master-slave synchronization, instead, all the nodes of the network are synchronized with the clock frequency of one master node. Each node selects the frequency of one incoming signal as the source of its own clock frequency. The node attempts to select such a signal that has the clock frequency of the master node of the network.

In self-organizing master-slave synchronization, each node itself makes the decision on its synchronization without obtaining any external information supporting the decision-making. As the nodes make the decision on synchronization independently, it must be determined in each node with which node the node in question is synchronized. These determinations are often carried out in form of a so-called priority list, whereby the node selects as the source of its synchronization the one of the appropriate incoming signals that has the highest priority, that is, the one highest on the list. If this signal is interrupted or if its quality deteriorates so that it can no longer be qualified as the source of synchronization, the node selects the signal on the list that has the next highest priority. The priority list must be constructed so that all the nodes on the list are between the node in question and the master node, whereby synchronization spreads from the master node to the lower levels.

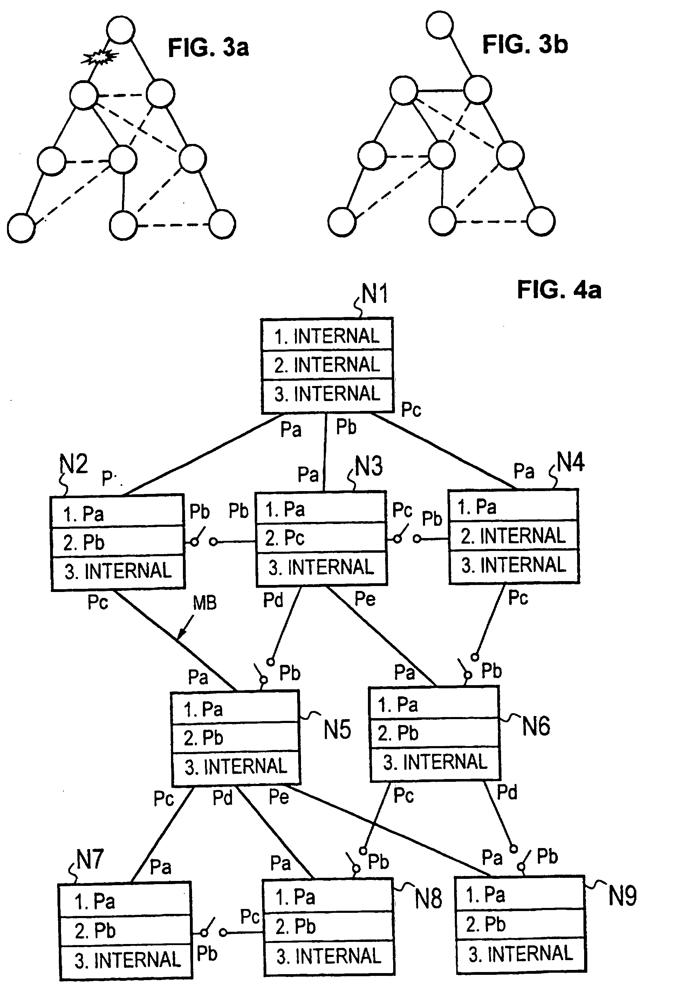

When the telecommunications network is studied as a graph, a directed acyclic slave network is established in master-slave synchronization upon the nodes of the network synchronizing with each other, the synchronization taking place along the curves of this slave network. When the entire network has synchronized with one and the same master node, a tree-like structure is formed in the network, termed as the synchronization tree. A network of this kind is illustrated in Figures 3a and 3b in which the nodes are marked with circles, and solid lines between the nodes are used for marking the connections along which synchronization takes place. Dotted lines illustrate spare synchronization routes. Figure 3a shows a network (synchronization tree) in an initial state and Figure 3b shows one possible outcome that may be achieved when a break occurs on the connection originating from the master node (cf. Figure 3a). If breaks or other fault situations occur in the network, they have an effect on the synchronization of the network only if they occur on the connection that belongs to the synchronization tree. Each break only has an effect on the synchronization of the nodes on a lower level in the same branch. The synchronization tree is thus reestablished only in the branch below the break point.

In accordance with the present invention, some prior art synchronization method is used in the network, by means of which method a hierarchical structure described above is established in the network. The synchronization method used is thus not limited to any specific method. The hierarchical structure established by the synchronization method is used for implementing a secured bus by switching on the bus on those (inter-nodal) connections along which the synchronization occurs. In other words, when studying the synchronization tree, the node switches on the bus on one connection proceeding to a higher level (i.e. on the connection along which the node receives its timing) and on connections proceeding to a lower level (a) on all of them or (b) only on those connections on which a node located on a lower level is using the connection in question for synchronization. The practical implementation depends on the synchronization method used, as will be described below.

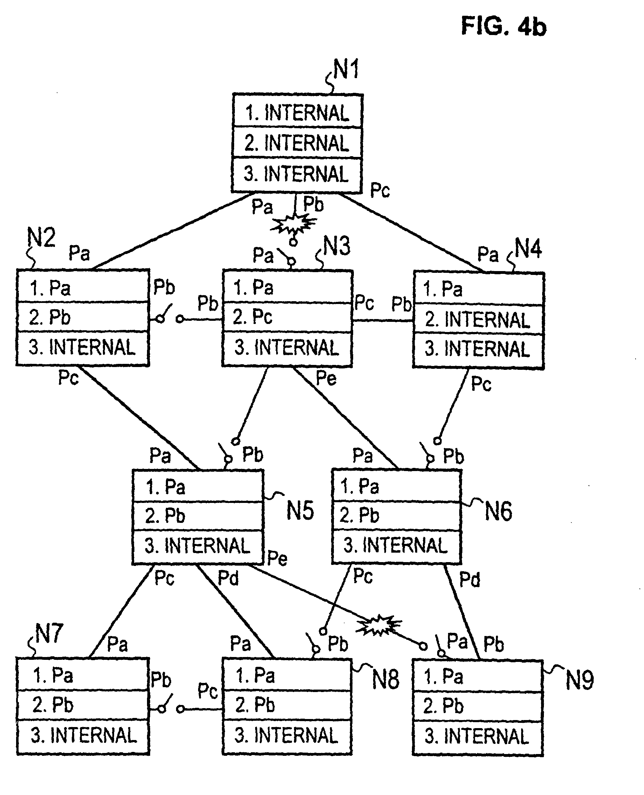

Figures 4a and 4b illustrate the use of the method of the invention in connection with a synchronization method based solely on a priority list. In this case the network has nine nodes N1...N9. There are three alternatives on the priority list of each node (said alternatives being marked inside the node one below the other), and the node selects from these alternatives either some signal frequency obtained from an adjacent node, or its internal clock source as the source of its own clock frequency. A signal obtained from an adjacent node is marked on the priority list with the symbol (Pa, Pb,...Pe) of the port connected in the direction of the node in question. Node N1 is a master node, which receives its timing from its own internal clock source in every case. In Figure 4a the network is in its normal state. The connections are shown from the point of view of the management bus. In case the switch at the beginning of the connection is switched off, the node has not switched the bus on for the connection in question. An operating bus is shown with a thicker line. (On the same connection, one party may thus switch the connection on, and the other party may switch it off, in which case the bus does not naturally pass via said connection. In order that the bus would pass via a certain connection, both parties must switch the connection on.)

Figure 4b shows the network in a situation in which the connection between nodes N1 and N3 as well as the connection between N5 and N9 are faulty. The nodes (N3 and N9) that have used these faulty connections for their timing are now synchronized along new connections and they simultaneously alter their settings with respect to bus. The bus is now cut off from the connections previously used for synchronization (and the management bus), but, correspondingly, the bus is switched on for the new connections used for synchronization.

It is not necessary for the user to determine which connections of the synchronization tree are on a lower level (i.e. on which connections the bus is switched on) if the nodes behind these connections are able to request switching the bus on. This is done simply by transmitting one request bit in the direction in which the synchronization has been established.

Provided that the number of the connections in the network is sufficiently small or the priority lists are sufficiently long, all the connections may be included on the priority list. Each connection is included on the priority list of the node located lower in the synchronization tree. The user thus does not need to determine separately on which connection the bus is switched on every time. In the ports included on the priority list the bus is switched on every time that the port in question is used for synchronization, in other ports the bus is continuously switched on.

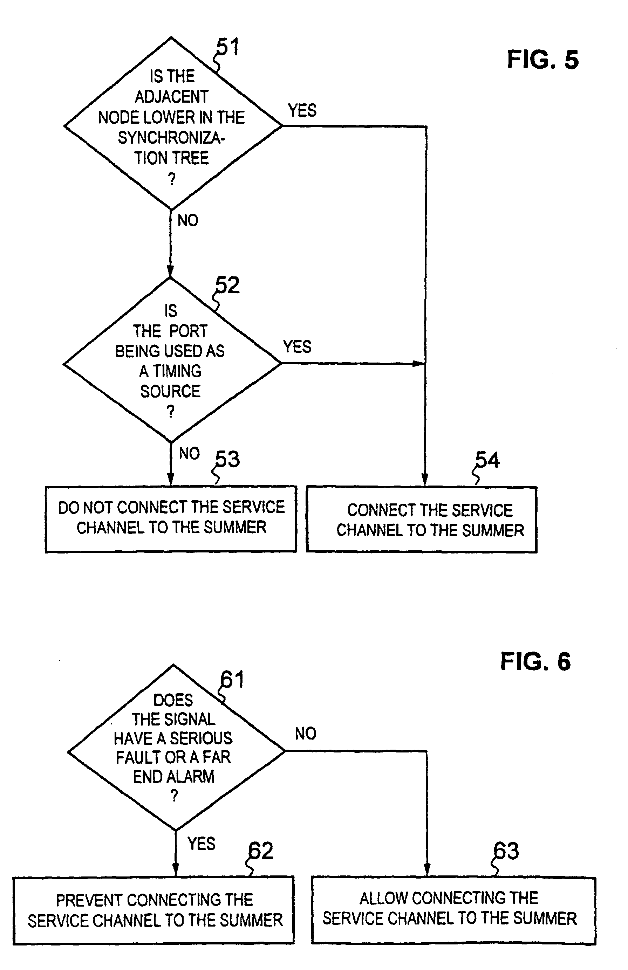

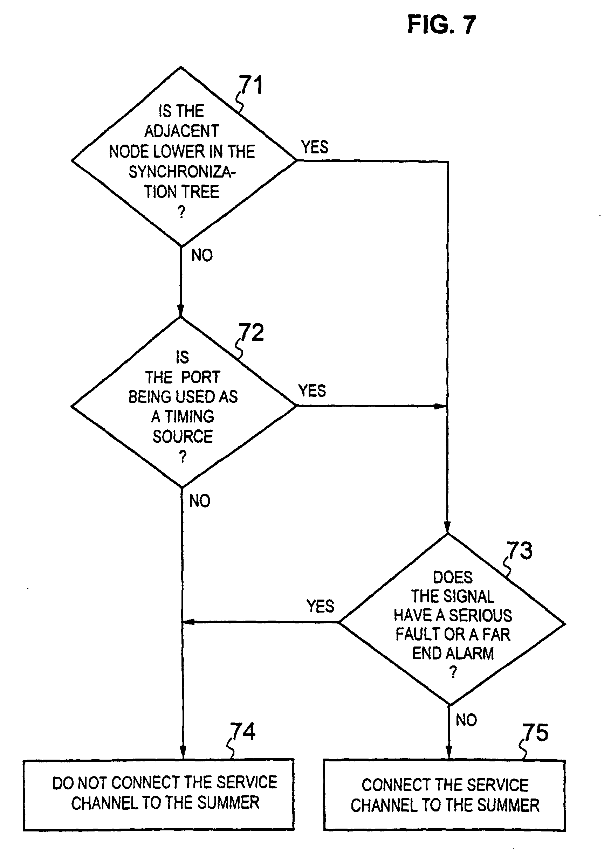

Figure 5 shows the inference process mentioned above, carried out separately for each node. It is first tested (step 51) whether an adjacent node has been connected to the port lower in the synchronization tree. This may be checked e.g. by means of the priority list in the manner disclosed above. In case the priority lists do not cover all the nodes, the user determines which connections are lower in the synchronization tree. If this is the case, the management bus is connected to the summer. Provided that the adjacent node connected to the port is not located lower in the synchronization tree, it is next studied (step 52) whether the port is used as a timing source. In the positive case the management bus is connected to the summer, and in the negative case the connection in question is not carried out. The inference process may be carried out by means of continuous monitoring, or it may be initiated separately e.g. upon receiving a new priority list or upon the used timing source changing. Alongside the inference process, the state of the signal may also be monitored in the manner shown in Figure 6. Connecting the management bus to the summer is thus prevented (step 62) in case the signal is not appropriate (e.g. fault or far end alarm). In other case, said connection is allowed (step 63). The monitoring and inference processes may also be combined, which will result in a flow chart according to Figure 7. It must further be noted that said processes are carried out separately for each port of the node.

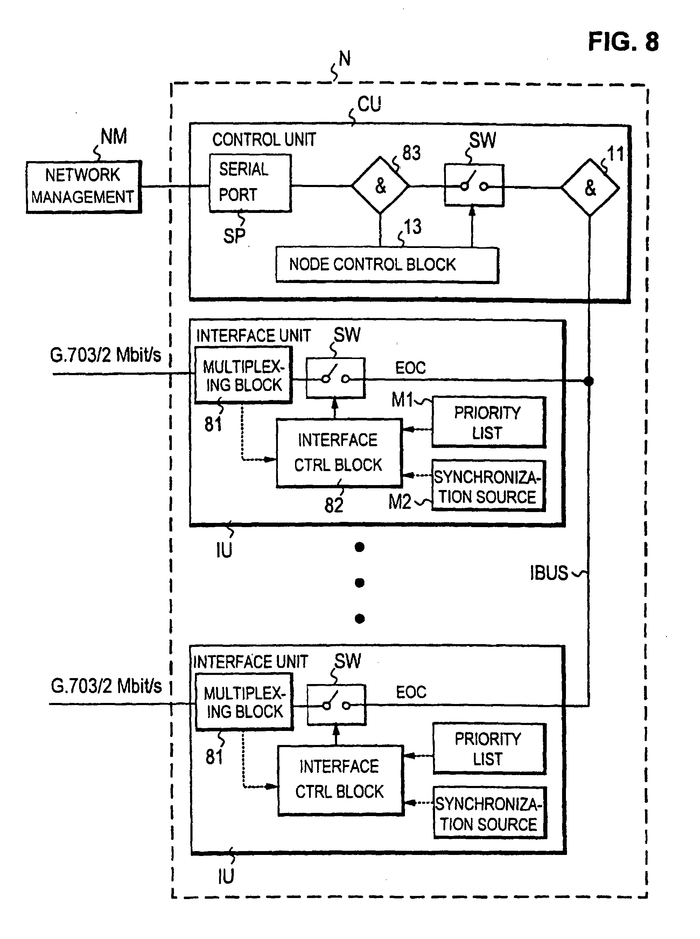

Figure 8 illustrates those units of a single network node that are essential for the invention. A node N comprises a plurality of parallel interface units IU, by means of which the node is connected to the network (the interface may be e.g. a 2 Mbit/s PCM interface according to the above recommendations, as shown in the figure), and a control unit CU common to several interface units. Each interface unit comprises at its input a multiplexing/demultiplexing block 81, which is connected via a switch SW to an internal bus IBUS of the node. Along this bus, a logical AND operation takes place for signals connected to the bus (in a normal state, pull-up resistors maintain the bus in the 1-state until some of the signals connected to the bus commands the bus to the 0-state). As it was disclosed above, the desired management channels must be able to be switched off and on according to the situation for implementing a secured bus. This may be carried out in accordance with Figure 1b so that each management channel has a switch SW of its own, which is controlled from a control block 82 of the interface unit. The EOC management channel is thus separated from the rest of the signal in multiplexing blocks 81, and the control block of the interface unit performs the processes shown in Figures 5...7 making use of the information on the signal, received via the multiplexing block 81, and the information on the priority list of the synchronization and the synchronization source used for timing in each case, received from memories M1 and M2, respectively. (although memories M1 and M2 are depicted as interface unit-specific in the figure, it is more advantageous to implement them common to all interface units).

The control unit CU comprises a summer 83 for connecting the management channel coming from a control block 13 of the node and from the network management system NM in a similar manner by means of the switch SW to summer 11 (cf. Figure 1). The network management system is connected by means of a data connection (typically a serial connection, such as V.11) to a serial port SP at the input of the control unit, said serial port in turn being connected to summer 83.

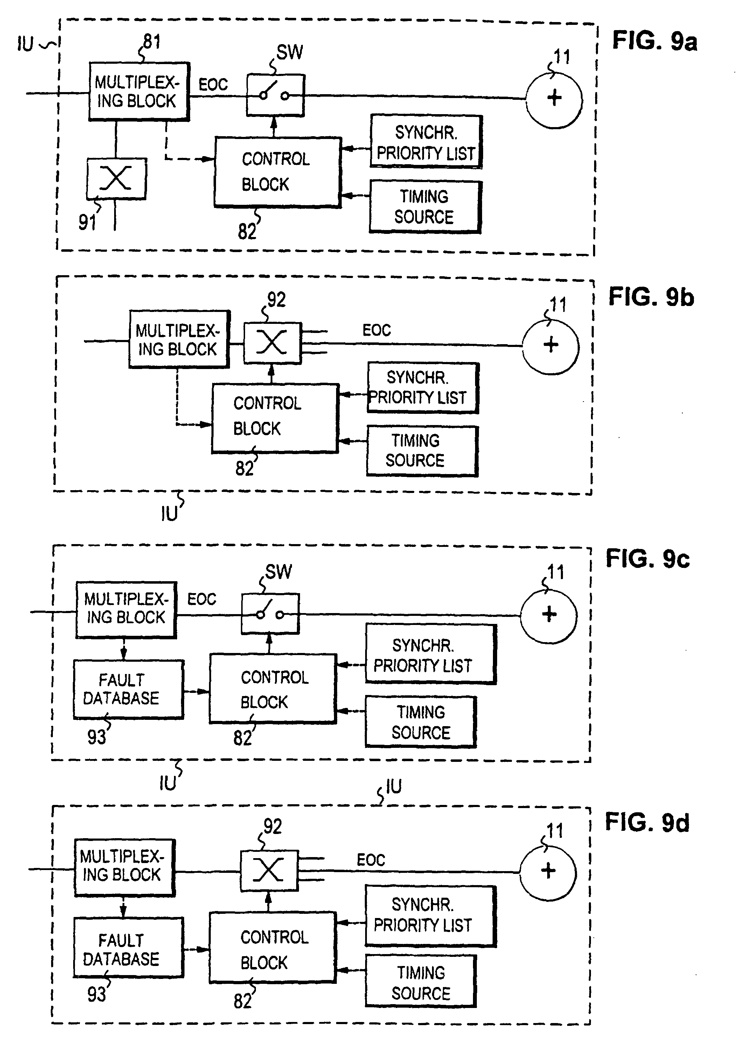

Figures 9a...9d show various examples for implementing a single interface unit provided with a conditional switching. Figure 9a shows a solution corresponding to that in Figure 8 in which solution the fault and status information are obtained directly from the multiplexing block and in which separate switches SW are used, via which the signal of the management channel is switched to the summer 11 when need be. From the multiplexing block, a signal is switched to the cross-connection block 91 (not shown in Figure 8), from which it is switched further. Figure 9b shows a second alternative in which the entire signal (all the time-slots) is applied from the multiplexing block to the cross-connection block 92, from which the EOC channel is connected to summer 11 and the other channels are connected to other desired points. Figures 9c and 9d show such alternatives in which the control block 82 controlling the switch SW obtains the fault information from a separate fault database 93, not directly from the multiplexing block. In other respects, the implementation of Figure 9c corresponds to that shown in Figure 9a and the implementation in Figure 9d corresponds to that in Figure 9b.

The operation of the nodal device is e.g. the following: In connection with the start-up, each control block 82 performs the process shown in Figure 7, in which process it reads the priority list and the state of the signal and the synchronization source currently used, and switches the management bus on or off according to them. The state of the signal is obtained either from the multiplexing block or from the fault database. When the priority list or the used synchronization source change during operation, this is communicated to a single control block 82, which re-performs the inference. In case a change occurs in the state of the signal, the change is communicated to a single control block either directly by the multiplexing block that detects the change or by the fault database, which obtains its information from the multiplexing block. After obtaining the information on the change, the control block re-performs the inference and updates the state of the switch accordingly.

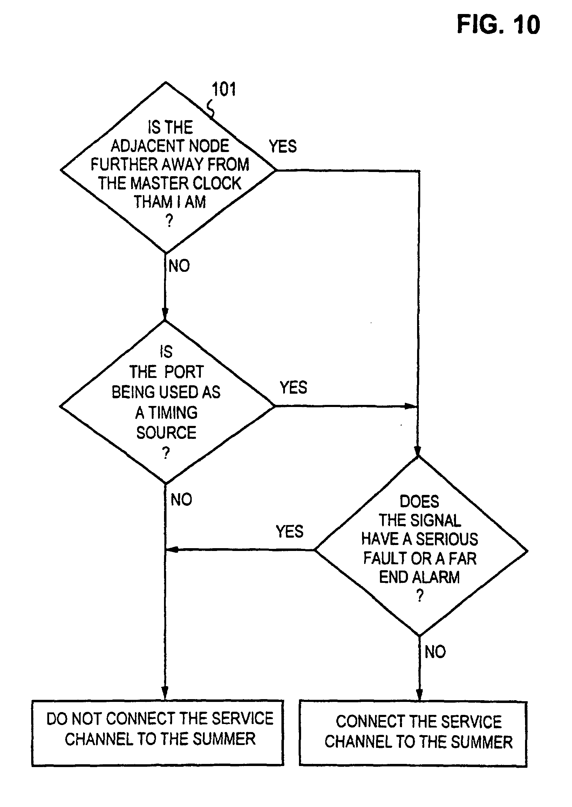

What has been disclosed in the above relates to implementing a management bus in a network in which the synchronization is based solely on the use of a (predetermined) priority list. In the following implementing the invention in networks employing message-based master-slave synchronization methods will be discussed. In message-based master-slave synchronization, a node is able to take the decision on its own synchronization on the basis of the synchronization messages contained in the incoming signals. In a network employing message-based synchronization, the implementation of the management bus depends on the synchronization method used. In case the information on the distance of the node to the master node is transmitted in the method in one way or the other, the implementation is clear. This kind of method is known e.g. from U.S. Patent No 2,986,723, in which the method disclosed is termed as a Self-Organizing Master-Slave synchronization, SOMS. The basic inference and monitoring of the signal carried out in this case are shown in Figure 10. The process is similar to the process shown in Figure 7 in other respects, but in the first step (step 101) where it is checked in the node whether the adjacent node is located remoter from the master node that the node in question. Each node switches the bus on in that interface via which it receives its timing, as well as in those interfaces from which a synchronization message is received, said message indicating that the node that transmitted the message is located remoter from the master node than the node that received the message. In case the nodes are located within an equal distance from the master clock, the bus will not be switched on between them.

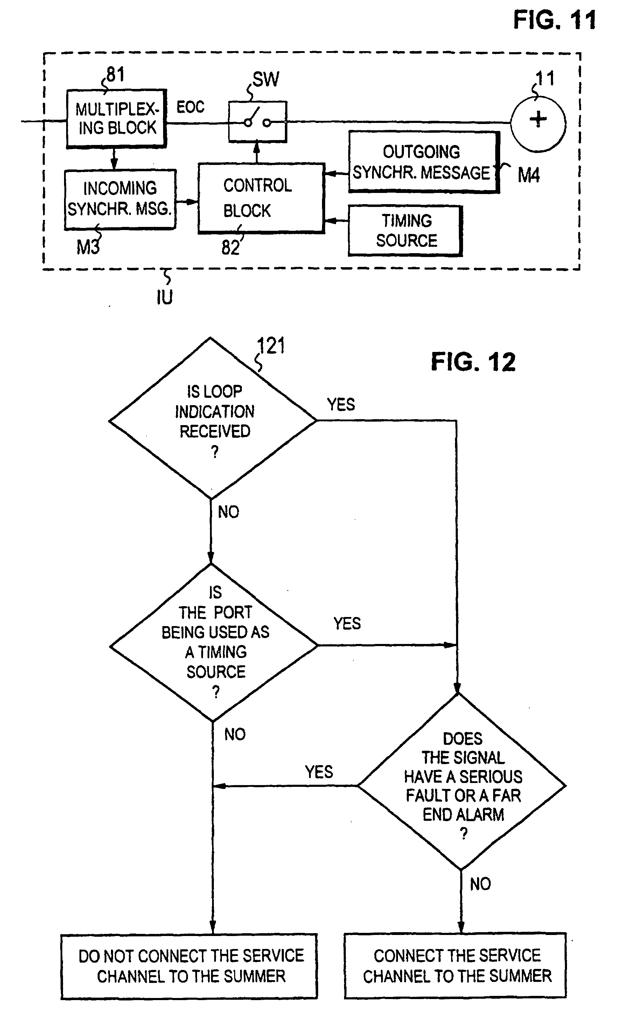

Figure 11 shows the basic devices required for implementing the method of the invention from the point of view of one interface unit IU when a message-based master-slave synchronization method is employed. A signal enters a multiplexing block 81, at which a synchronization message and an EOC management channel are separated from it. The latter is applied to the switch, and the synchronization message is stored in a buffer M3. The control block 82 compares (according to step 101) the distance information. The distance of the adjacent node is found from a synchronization message stored in the buffer M3, and the distance of the node in question from its own outgoing synchronization message (which is read from a memory M4). In a SOMS message, for instance, the distance is indicated by the middle part D2 of the synchronization identifier (the distance is expressed as the number of the nodes between). Provided that the adjacent node is remoter (or the port is used as a timing source), the management bus is connected to the summer.

The structure of Figure 11 (related to a message-based synchronization method) may also be modified in the same way as was shown in Figures 9a...9d. It is also possible to obtain a few variations to the general structure of the interface unit as the incoming synchronization message may be obtained either from the multiplexing block or from the cross-connection block.

In case the network employs communicating master-slave synchronization in which an indication o a loop generated in synchronization is transmitted, th inference is carried out port-specifically in the wa shown in Figure 12. In this case, too, the inferenc process is similar to that shown in Figure 7 in othe respects, but in the first step (step 121) it is checked in the node whether an indication of a loop has been received. In case such an indication has been received (or the port is used as a timing source), and the signal is appropriate in all other respects, the management channel is connected to the summer.

An example of a communicating master-slave synchronization method in which an indication of a loop generated in synchronization is transmitted is prior art LP synchronization (Loop Protected). LP synchronization aims to prevent the timing from becoming asynchronous in loop networks by using two status bits mcb and lcb to assist the priority lists. The status bits are transmitted between the nodes of the network. The first status bit mcb (master control bit) indicates whether the synchronization originates from the master node of the network. The master node determined for the network transmits this bit as a logical zero in its outgoing signals, and the other nodes forward it in case they have synchronized with the signal with a mcb bit having the value zero. The second status bit lcb (loop control bit) indicates whether there is a loop in synchronization. Each node of the network transmits this bit as a logical one in he direction in which it has synchronized itself and as a logical zero in the other directions. In this case, the loop information indicates that the value of the lcb bit is one. [LP synchronization is disclosed e.g. in the master's thesis of Jukka Kainulainen: "Message based Master-slave Synchronization in Digital Telenetworks", University of Technology, Department of Computer Science, Espoo, 1993, in which those interested will find a more detailed description].

The inferences according to Figures 10 and 12 may of course be carried out in two phases (cf. Figures 5 and 6). Switching is thus allowed, provided that there is no serious fault or alarm in the signal, but the actual switching is carried out on the basis of monitoring the distance and the timing source or the loop indication and the timing source.

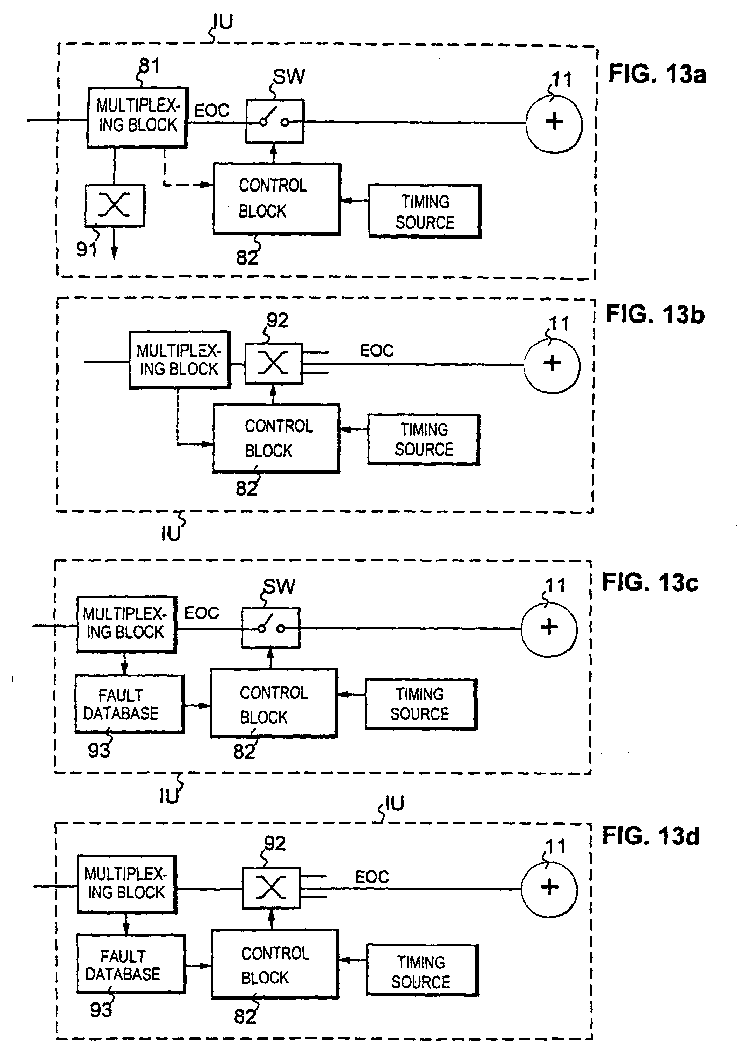

Figures 13a...13d show different alternatives for implementing a single interface unit IU when the network employs a synchronization method in which an indication of a loop generated in synchronization is transmitted (e.g. LP synchronization). The different alternatives correspond to those shown in Figures 9a...9d in other respects, but the priority list is no longer needed in making the decision on switching. In the example of Figure 13a, the EOC channel is separated in a multiplexing block, applied to a switch, and the loop indication and the fault information are obtained from the multiplexing block. In the example of Figure 13b, the entire signal (all the time-slots) are applied from the multiplexing unit to a cross-connection block 92, from which the EOC channel is connected to the summer 11. The loop indication and the fault information of the signal are again obtained from the multiplexing block directly to the control block. In the examples shown in Figures 13c and 13d, the control block 82 controlling the switch SW obtains the loop indication and the fault information of the signal from a separate fault database 93, not directly from the multiplexing block. In other respects, the implementation of Figure 13c corresponds to that shown in Figure 13a and the implementation of Figure 13d corresponds to that in Figure 13b.

A secured network may also be implemented by carrying out another similar operation alongside a synchronization method of the kind described above, but, instead of being used for synchronization, said operation is used for establishing a secured bus. In a network employing SOMS synchronization, for instance, it is possible to establish another system alongside the SOMS system operating in the same way and being used only for implementing a secured bus in the network. If e.g. a simpler implementation is desired, the systems may differ from each other in that it is possible to establish e.g. a secured bus based on an LP synchronization system alongside a SOMS system in a network employing SOMS synchronization. When the bus is thus each time connected to proceed at least on those data connections along which the synchronization method chooses the synchronization to be transmitted from one node to another, this means that the synchronization does not necessarily proceed along said connections (as is described above). The synchronization method used for implementing the bus, however, operates in such a way that it would choose the synchronization to proceed along said connections if it were also used for synchronization. By means of "overlapping" methods, it is easy to implement the secured management bus e.g. only in a part of the network although synchronization is carried out in the entire network.

Although the invention has been disclosed above with reference to examples according to the attached drawings, it is obvious that the invention is not limited thereto, but it may be modified within the scope of the inventive idea set forth above and in the attached claims. What has been disclosed above is only an example of the basic structure of the apparatus, and a person skilled in the art may vary this structure in several ways without deviating from the scope of the attached claims. The control block, for instance, may be common to all the interfaces on the same interface card or even to all the interfaces of a node. The same applies to the multiplexing and cross-connection blocks.

## Claims

1. A method for implementing a fault-tolerant bus in a telecommunications network comprising a plurality of nodes (M, 1 ... 8; N1...N9) connected to each other by data connections, the method comprising:
- establishing a hierarchical acyclic structure in the network by means of a master-slave synchronization method,
- a bus (MB) is implemented in the network for transmitting information outside user traffic,
**characterized in that**
- the implementation of the bus is linked to the synchronization method used in the network, so that the transmission of said information on the bus is routed along at least those inter-nodal data connections along which the synchronization method has chosen for the synchronization message to proceed.

2. A method as claimed in claim 1, in which master-slave synchronization is implemented by using in the nodes only node-specific priority lists indicating the mutual priority order of the signals available as a timing source,
**characterized in that** the node switches on the management bus on that connection from which it obtains its timing each time, as well as on those connections on which the adjacent nodes behind them may obtain their timing from the node in question.

3. A method as claimed in claim 1, in which master-stave synchronization is carried out by employing in the network a message-based synchronization method in whose message an information
on the distance of the node to the master node of the network is transmitted, **characterized in that** each node of the network switches on the management bus a) **in that** interface via which it receives its timing and b) in those interfaces from which a synchronization message is received, said message indicating that the node that transmitted the message is located remoter from the master node of the network than the node that received the message.

4. A method as claimed in claim 1, in which master-slave synchronization is carried out by employing in the network a synchronization method in which an indication on a loop generated in synchronization is transmitted
**characterized in that** each node of the network switches the management bus on (a) **in that** interface via which it obtains its timing and (b) in those interfaces from which a synchronization message indicating a loop generated in synchronization is received.

5. A method a s claimed in claim 1, **characterized in that** in addition to the synchronization method to which the implementation of the bus is linked, a second synchronization method is used for synchronizing the network.

6. An arrangement for implementing a fault-tolerant bus in a telecommunications network comprising a plurality of nodes (M, 1 ... 8; N1...N9) connected to each other by data connections, according to which arrangement:
- the network is arranged to use a master-slave synchronization method, whereby a hierarchical acyclic structure is established in the network, and
- the network comprises a bus (MB) for transmitting information outside user traffic, said bus having been switched on by specific data connections originating from a node;
**characterized in that** the node comprises means (82, SW) to switch the transmission of said information from one connection to another, the switching operation carried out by said means depending on the synchronization route selected by the used synchronization method used for switching the bus on at least on those data connections along which the synchronization method used in the network has chosen the synchronization message to proceed.

7. An arrangement according to claim 6, **characterized in that** the fault-tolerant bus is a management bus.

8. An arrangement according to claim 6 or 7, **characterized in that** said information is network management-related information.

## Patentansprüche

1. Verfahren zum Implementieren eines fehlertoleranten Busses in einem Telekommunikationsnetzwerk mit einer Vielzahl von miteinander durch Datenverbindungen verbundenen Knoten (M, 1...8, N1...N9), wobei das Verfahren aufweist:
- Einrichten einer hierarchischen, azyklischen Struktur im Netzwerk mit Hilfe eines Master-Slave-Synchronisationsverfahrens,
- wobei im Netzwerk ein Bus (MB) zum Übertragen von Informationen abgesehen von Nutzerverkehr implementiert wird,
**dadurch gekennzeichnet, dass**
- die Implementierung des Busses mit dem im Netzwerk verwendeten Synchronisationsverfahren in Zusammenhang steht, so dass die Übertragung der Informationen auf dem Bus entlang zumindest derjenigen Zwischenknoten-Datenverbindungen geleitet wird, die das Synchronisationsverfahren dafür gewählt hat, dass die Synchronisationsnachrichten entlang diesen verlaufen.

2. Verfahren gemäß Anspruch 1, bei dem eine Master-Slave-Synchronisation implementiert wird, indem in den Knoten nur Knoten-spezifische Prioritätslisten verwendet werden, die die wechselseitige Prioritätsreihenfolge der als Zeitsteuerungsquelle verfügbaren Signale angeben,
**dadurch gekennzeichnet, dass** der Knoten den Verwaltungsbus auf derjenigen Verbindung zuschaltet, von der er jedes Mal seine Zeitsteuerung erhält, ebenso wie auf denjenigen Verbindungen, auf denen die benachbarten Knoten hinter ihnen ihre Zeitsteuerung von dem besagten Knoten erhalten können.

3. Verfahren gemäß Anspruch 1, bei dem eine Master-Slave-Synchronisation durch Einsetzen eines Nachrichtenbasierten Synchronisationsverfahrens im Netzwerk durchgeführt wird, in dessen Nachricht eine Information
über die Distanz des Knotens zum Master-Knoten des Netzwerks übertragen wird, **dadurch gekennzeichnet, dass** jeder Knoten des Netzwerks den Verwaltungsbus zuschaltet a) an derjenigen Schnittstelle, über die er seine Zeitsteuerung empfängt, und b) an denjenigen Schnittstellen, von denen eine Synchronisationsnachricht empfangen wird, wobei die Nachricht angibt, dass sich der Knoten, der die Nachricht übertragen hat, weiter vom Master-Knoten des Netzwerks entfernt befindet als der Knoten, der die Nachricht empfangen hat.

4. Verfahren gemäß Anspruch 1, bei dem eine Master-Slave-Synchronisation durch Einsetzen eines Synchronisationsverfahrens im Netzwerk durchgeführt wird, bei dem ein Hinweis auf eine bei einer Synchronisation erzeugte Schleife übertragen wird,
**dadurch gekennzeichnet, dass** jeder Knoten des Netzwerks den Verwaltungsbus zuschaltet a) an derjenigen Schnittstelle, über die er seine Zeitsteuerung empfängt, und b) an denjenigen Schnittstellen, von denen eine Synchronisationsnachricht empfangen wird, die eine bei einer Synchronisation erzeugte Schleife angibt.

5. Verfahren gemäß Anspruch 1, **dadurch gekennzeichnet, dass** zusätzlich zu dem Synchronisationsverfahren, mit dem die Implementierung des Busses in Zusammenhang steht, ein zweites Synchronisationsverfahren zum Synchronisieren des Netzwerks verwendet wird.

6. Anordnung zur Implementierung eines fehlertoleranten Busses in einem Telekommunikationsnetzwerk mit einer Vielzahl von miteinander durch Datenverbindungen verbundenen Knoten (M, 1...8, N1...N9), wobei gemäß der Anordnung:
- das Netzwerk eingerichtet ist, ein Master-Slave-Synchronisationsverfahren zu verwenden, wodurch eine hierarchische, azyklische Struktur im Netzwerk eingerichtet wird, und
- das Netzwerk einen Bus (MB) zum Übertragen von Informationen abgesehen von Nutzerverkehr aufweist, wobei der Bus durch bestimmte Datenverbindungen zugeschaltet wurde, die von einem Knoten stammen,
**dadurch gekennzeichnet, dass** der Knoten eine Einrichtung (82, SW) zum Schalten der Übertragung der Informationen von einer Verbindung zu einer anderen aufweist, wobei die Schaltoperation durch die Einrichtung abhängig vom Synchronisationsleitweg durchgeführt wird, der vom verwendeten Synchronisationsverfahren ausgewählt ist, das zum Zuschalten des Busses auf zumindest denjenigen Datenverbindungen verwendet wird, die das im Netzwerk verwendete Synchronisationsverfahren dafür gewählt hat, dass die Synchronisationsnachrichten entlang diesen verlaufen.

7. Anordnung gemäß Anspruch 6, **dadurch gekennzeichnet, dass** der fehlertolerante Bus ein Verwaltungsbus ist.

8. Anordnung gemäß Anspruch 6 oder 7, **dadurch gekennzeichnet, dass** die Informationen mit Netzwerkverwaltung in Beziehung stehende Informationen sind.

## Revendications

1. Procédé d'implémentation d'un bus à tolérance de pannes dans un réseau de télécommunications comportant une pluralité de noeuds (M, 1 ... 8 ; N1...N9) connectés l'un à l'autre par des liaisons de données, le procédé consistant à
établir une structure hiérarchique, acyclique dans le réseau à l'aide d'un procédé de synchronisation maître-esclave,
implémenter un bus (MB) dans le réseau pour transmettre de l'information hors du trafic d'utilité,
**caractérisé en ce que**
l'implémentation du bus est liée au procédé de synchronisation utilisé dans le réseau de sorte que la transmission de ladite information sur le bus est routée sur au moins les liaisons de données internodales que le procédé de synchronisation a choisies pour le message de synchronisation à se procéder.

2. Procédé selon la revendication 1, dans lequel la synchronisation maître esclave est implémentée par utilisant seulement des listes de priorité propres au noeud dans les noeuds indiquant l'ordre de priorité mutuel des signaux utilisables comme une source d'horloge,
**caractérisé en ce que** le noeud met le bus de gestion en circuit sur la connexion d'où il obtient sa base de temps ainsi que sur les connexions sur lesquelles les noeuds voisins derrière elles peuvent obtenir leur base de temps de ce noeud-ci.

3. Procédé selon la revendication 1, dans lequel la synchronisation maître-esclave est réalisée par utilisant dans le réseau un procédé de synchronisation à messages, dans le message duquel
on transmet l'information sur la distance du noeud au noeud maître du réseau, **caractérisé en ce que** chaque noeud du réseau met le bus de gestion en circuit a) à l'interface par laquelle il reçoit sa base de temps et b) aux interfaces à partir desquelles il reçoit un message de synchronisation, ledit message indiquant que le noeud qui transmit le message se trouve plus loin du noeud maître du réseau que le noeud qui reçut le message.

4. Procédé selon la revendication 1, dans lequel la synchronisation maître esclave est réalisée par utilisant dans le réseau un procédé de synchronisation dans lequel on transmet une indication d'une boucle générée en synchronisation,
**caractérisé en ce que** chaque noeud du réseau commute le bus de gestion a) à l'interface par laquelle il reçoit son minutage et b) aux interfaces à partir desquelles un message de synchronisation sur une boucle générée en synchronisation est reçu.

5. Procédé selon la revendication 1, **caractérisé en ce qu'**en plus du procédé de synchronisation auquel l'implémentation du bus est liée, on utilise un second procédé de synchronisation pour synchroniser le réseau.

6. Disposition à implémenter un bus à tolérance de pannes dans un réseau de télécommunications comportant une pluralité de noeuds (M, 1 ... 8 ; N1...N9) connectés l'un à l'autre par des liaisons de données, selon laquelle disposition
le réseau est ménagé à utiliser un procédé de synchronisation maître esclave, une structure hiérarchique, acyclique étant établie dans le réseau, et
le réseau comporte un bus (MB) pour transmettre de l'information hors du trafic d'utilité, ledit bus étant mis en circuit par certaines liaisons de données en provenance d'un noeud ;
**caractérisé en ce que** le noeud comporte des moyens (82, SW) pour commuter la transmission de ladite information d'une liaison à une autre, l'opération de commutation réalisée par lesdits moyens dépendant de la route de synchronisation choisie par le procédé de synchronisation utilisé pour mettre le bus en circuit au moins sur les liaisons de données que le procédé de synchronisation a choisies pour le message de synchronisation à se procéder.

7. Disposition selon la revendication 6, **caractérisé en ce que** le bus à tolérance de pannes est un bus de gestion.

8. Disposition selon la revendication 6 ou 7, **caractérisé en ce que** ladite information est l'information relative à la gestion du réseau.
